# EUROPÄISCHE PATENTSCHRIFT

(11) **EP 4 088 007 B1**
(45) Veröffentlichungstag und Bekanntmachung des Hinweises auf die Patenterteilung: **24.04.2024**
(21) Anmeldenummer: 21704179.7
(22) Anmeldetag: 19.01.2021
(51) Int. Cl.: F01D 5/28, F01D 5/14

(54) **FASERVERSTÄRKTE LAUFSCHAUFEL FÜR EINE STRÖMUNGSMASCHINE SOWIE VERFAHREN ZUM HERSTELLEN EINER SOLCHEN LAUFSCHAUFEL**
FIBER-REINFORCED ROTOR BLADE FOR A FLOW MACHINE AND METHOD FOR PRODUCING SUCH A ROTOR BLADE
AUBE DE ROTOR RENFORCÉE PAR DES FIBRES POUR UNE TURBOMACHINE ET PROCÉDÉ DE FABRICATION D'UNE TELLE AUBE DE ROTOR

(30) Priorität: 14.02.2020 DE 102020201867
(43) Veröffentlichungstag der Anmeldung: 16.11.2022
(73) Patentinhaber: Siemens Energy Global GmbH & Co. KG, 81739 München (DE)
(72) Erfinder: HAJE, Detlef, 02828 Görlitz (DE)
(86) Internationale Anmeldenummer: PCT/EP2021/051084
(87) Internationale Veröffentlichungsnummer: WO 2021/160383

(56) Entgegenhaltungen:
- EP-A2- 1 939 403
- EP-B1- 1 939 403
- DE-A1-102008 061 463
- DE-A1-102013 225 572
- DE-B4-102008 061 463

## Beschreibung

### TECHNISCHES GEBIET DER ERFINDUNG

Laufschaufeln von Strömungsmaschinen werden unter anderem durch Fliehkräfte stark beansprucht und sind entsprechend zu bemessen. Insbesondere bei großen Schaufellängen oder hohen Drehzahlen lassen sich Laufschaufeln nur noch mit hochfesten Werkstoffen oder schließlich gar nicht mehr herstellen. Laufschaufeln bei verschiedenen Drehzahlen lassen sich durch die Größe A * n² vergleichen, wobei A die überstrichene Fläche und n die Drehzahl ist.

### TECHNISCHER HINTERGRUND DER ERFINDUNG

Es ist bekannt, bei großen Laufschaufeln, diese aus einem Faserverbundmaterial herzustellen. Dabei macht man sich die hohe spezifische Festigkeit der Faserverbundwerkstoffe (insbesondere CFK) zu Nutze, um auch unter hohen Drehzahlen große Schaufellängen zu erreichen. Faserverbundwerkstoffe besitzen allerdings einige Eigenschaften, die einem weiten Einsatz in Strömungsmaschinen noch entgegenstehen:
- Stark richtungsabhängige Festigkeit und Steifigkeit. Die höchsten Werte werden parallel zur Faserrichtung erreicht, senkrecht dazu sind Festigkeiten und Steifigkeiten um etwa eine Größenordnung geringer.
   ∘ Dies stellt insbesondere die Gestaltung von hochbeanspruchten Kontaktflächen (z.B. der Schaufelfuß) vor konstruktive Grenzen, da Querkräfte zu übertragen sind. Dies ist derzeit ein begrenzender Faktor für die erreichbare Schaufellänge.
   ∘ Um ein hinreichend verwindungssteifes Schaufelblatt zu erzielen, sind nicht nur Fasern in Hauptbeanspruchungsrichtung notwendig, sondern auch unter abweichenden Richtungen (+/-30°, +/-45°). Diese tragen weniger zur Beanspruchbarkeit bei.
- Schädigung durch Medieneinflüsse und durch mechanische Einwirkungen.
   ∘ Medieneinflüsse können zu einer Veränderung der Werkstoffeigenschaften führen, bei einem Einsatz in Dampfturbinen beispielsweise durch Einlagerung von Wasser. Dies bewirkt einen zeitabhängigen Festigkeitsverlust und kann schließlich zu einem Versagen des Bauteils führen. Bei einem Einsatz als Verdichterschaufel einer Gasturbine kann die Feuchtigkeit der zuströmenden Luft ebenfalls eine Wassereinlagerung bewirken. Dies gilt besonders bei einer Eindüsung von Wasser in die Ansaugluft.
   ∘ Mechanische Einwirkungen können (speziell quer zur Faserrichtung) nur in geringem Maße ertragen werden. Ist der Ort der Einwirkung eingrenzbar, so können hier Schutzbauteile (wie etwa Schutzleisten bei Triebwerks-Gebläseschaufeln) vorgesehen werden. Bei Dampfturbinen ist der Ansatz bekannt, an Niederdruckschaufeln lokale Schutzleisten gegen Tropfenschlagerosion anzubringen. Hierbei stellt insbesondere die zuverlässige schwingungs- und fliehkraftbeständige Verbindung zwischen Schutzleiste und Verbundwerkstoff eine große Herausforderung dar.

Ausgehend vom Stand der Technik (Dokument EP 1939403 A2) ist Aufgabe der vorliegenden Erfindung, eine faserverstärkte Laufschaufel für eine Strömungsmaschine sowie Verfahren zum Herstellen einer solchen Laufschaufel aufzuzeigen, die die Eigenschaften der Verbundwerkstoffe mit den Anforderungen in Strömungsmaschinen vereinbar macht und somit einen dauerhaften Einsatz ermöglicht.

Die Aufgabe wird hinsichtlich der Laufschaufel durch die Merkmale des unabhängigen Patentanspruch 1 und hinsichtlich des Verfahrens durch die Merkmale des unabhängigen Patentanspruchs 11.

Vorteilhafte Ausgestaltungen und Weiterbildungen der Erfindung, die einzeln oder in Kombination miteinander eingesetzt werden können, sind Gegenstand der Unteransprüche. Die erfindungsgemäße Laufschaufel für eine Strömungsmaschine, zeichnet sich durch einen Schaufelblattbereich sowie einen Schaufelfußbereich aus, wobei die Laufschaufel, wenigstens ein aus einem Faserverbundwerkstoff ausgebildetes Faserverbundteil, sowie eine Umschließung aufweist und die Umschließung, das wenigstens eine Faserverbundteil, vollständig umschließt, wobei das Faserverbundteil gegenüber der Umschließung vorgespannt ist.

Eine Vorspannung des Faserverbundteiles gegenüber der Umschließung entlastet letztere und sorgt für eine hohe Tragfähigkeit des Gesamtquerschnittes (Faserverbundteil + Umschließung).

Auf Grund der vollständigen Umschließung des Faserverbundteiles wird dieses von Medieneinflüssen zuverlässig abgeschirmt, wodurch etwaige Festigkeitseinbußen wirkungsvoll verhindert werden. Dies stellt eine wesentliche Voraussetzung für einen dauerhaften Einsatz dar.

Eine Ausgestaltung der Erfindung sieht vor, dass die Umschließung Kontaktelemente umfasst. Als Kontaktelemente sind alle Bereiche der Laufschaufel anzusehen, die Kontakt zu benachbarten Bauteilen haben, wie der Schaufelfußbereich, der in einer Nut im Rotor eingreift oder die Deckplatte bzw. Dämpfungsdrähte, die sich gegenüber benachbarten Laufschaufeln abstützen, um Schwingungen zu reduzieren. Die Einbindung der Kontaktelemente in die Umschließung erlaubt hohe Kontaktpressungen und damit große Schaufellängen.

Eine weitere Ausgestaltung der Erfindung sieht vor, dass die Umschließung aus einem metallischen Werkstoff besteht und das wenigstens eine Faserverbundteil druckdicht umschließt, wobei sich druckdicht auf die betriebsüblich zu erwartenden Drücke bezieht. Eine Umschließung aus metallischem Werkstoff erlaubt hohe Kontaktpressungen an den Kontaktelementen, insbesondere dem Schaufelfuß und damit große Schaufellängen. Der druckdichte Verschluss der Umschließung erfolgt nach dem Einbringen des wenigstens einen Faserverbundteiles durch eine der folgenden Verbindungsarten: Stoffschlüssig (z. B. Schweißen, Löten, Kleben), formschlüssig (z. B. Einsetzen, Einrasten, Verriegeln, Bolzenverbindung) oder kraftschlüssig (z. B. Schraubverbindung, Schrumpfsitz). Auch kann die Verbindung generativ hergestellt werden (Auftragen einer Geometrie). Weiter kann eine Kombination der Verbindungsarten ausgeführt werden.

Unter Einbringung des wenigstens einen Faserverbundteiles ist die Positionierung desselben im vorgesehenen Hohlraum zu verstehen, oder dessen Positionierung auf einer Innenseite eines Schaufelteils und anschließendem Verschluss der Innenseite mittels eines Schaufelteils. Aufgrund hoher Schwingungsbeanspruchungen ist ein robuster und zuverlässiger Verschluss anzustreben. Im Fall einer metallischen Umschließung hat sich eine Schweißverbindung (Dichtschweißung) bewährt. Hierbei ist durch die Prozessführung (eingebrachte Wärmemenge, Abstand von der Schweißnaht) sicherzustellen, dass der Faserverbundwerkstoff nicht überhitzt und geschädigt wird.

Eine besonders vorteilhafte Ausgestaltung der Erfindung sieht vor, dass das wenigstens eine Faserverbundteil in Hauptbeanspruchungsrichtung der Laufschaufel vorgespannt wird. Die Vorspannung in Hauptbeanspruchungsrichtung des Faserverbundteiles erfolgt gegenüber der Umschließung, welche dadurch eine Druckvorspannung erfährt. Das Faserverbundteil kann für die hauptsächlich unidirektionale Kraftübertragung optimiert werden, während die Umschließung Torsions-, Biegungs- und Wölbkräfte übernehmen kann.

Eine weitere Ausgestaltung der Erfindung sieht vor, dass wenigstens ein Faserverbundteil an wenigstens zwei Stellen an der Umschließung fixiert ist. Durch die Fixierung des wenigstens einen Faserverbundteiles an zwei Stellen an der Umschließung kann die optimale Vorspannung des Faserverbundteiles gegenüber der Umschließung erfolgen. Eine Ausgestaltung der Erfindung sieht vor, dass das wenigstens eine Faserverbundteil im, oder in der Nähe des Schaufelfußbereichs sowie im Schaufelblattbereich fixiert ist. Für die Kraftleitung hat es sich als vorteilhaft erwiesen, das Faserverbundteil im Schaufelfußbereich oder in der Nähe des Schaufelfußbereiches und erneut im Schaufelblattbereich zu fixieren. Weiterhin hat es für die Krafteinleitung als vorteilhaft erwiesen, dass das Faserverbundteil im Schaufelblattbereich im Wesentlichen in Hauptbeanspruchungsrichtung der Laufschaufel geführt ist.

Eine weitere Ausgestaltung der Erfindung sieht vor, dass die Laufschaufel wenigstens eine axiale/faserparallele Bohrung in der Umschließung aufweist und in der Bohrung Buchsen angeordnet sind, an denen zumindest ein Faserverbundteil fixiert ist. Die Art der Fixierung ist dabei von großer Wichtigkeit für die Tragfähigkeit und Zuverlässigkeit.

Dabei hat sich eine Ausführung als besonders geeignet erwiesen, bei der ein Krafteintrag in das Faserverbundteil im Wesentlichen über eine Schubspannung erfolgt. So kann eine übermäßige Beanspruchung des Faserverbundteiles vermieden werden. So kann das wenigstens eine Faserverbundteil mit Hilfe von Buchsen, welche in axial/faserparallel angeordneten Bohrungen angeordnet sind, fixiert werden. Solche Buchsen könnten positionsfest (in feststehenden Aufnahmen) oder einstellbar in der Schaufel eingesetzt werden. Eine Einstellbarkeit kann beispielsweise durch eine Gewindeverbindung, einen Keil, ein Passstück oder Ähnliches erfolgen. Die Fixierungen können dann durch direkten Verschluss (z.B. Schweißnaht) oder einen separaten (z.B. geschweißten) Deckel sichergestellt werden. Eine positionsfeste Fixierung kann auch durch unmittelbare Verklebung/Laminierung auf die Innenseite der Umschließung erreicht werden. Diese Position könnte dann durch einen druckdicht angebrachten Deckel verschlossen werden.

Das erfindungsgemäße Verfahren zum Herstellen einer Laufschaufel zeichnet sich durch die nachfolgenden Verfahrensschritte aus:
- Ausbilden wenigstens eines Faserverbundteiles;
- Ausbilden der Umschließung, wobei die Umschließung eine Öffnung zum Einführen des wenigstens einen Faserverbundteiles ausweist;
- Einbringen des wenigstens einen vorgefertigten Faserverbundteiles in die Umschließung;
- Druckdichtes Verschließen der Öffnung in der Umschließung mittels eines separaten Verschlusses oder mittels eine Schaufelteils insbesondere des Schaufelfußbereichs
- Vorspannen des Faserverbundteils gegenüber der Umschließung.

Bei diesem Verfahren werden das Faserverbundteil und die Umschließung zunächst einzeln hergestellt und anschließend das wenigstens eine vorgefertigte Faserverbundteil durch eine Öffnung in der Umschließung, in die Umschließung eingeführt.

Der druckdichte Verschluss der Umschließung kann nach dem Einbringen des wenigstens einen Faserverbundteiles bevorzugt durch eine der folgenden Verbindungsarten erfolgen: Stoffschlüssig (z. B. Schweißen, Löten, Kleben), formschlüssig (z. B. Einsetzen, Einrasten, Verriegeln, Bolzenverbindung) oder kraftschlüssig (z. B. Schraubverbindung, Schrumpfsitz). Auch kann die Verbindung generativ hergestellt werden (Auftragen einer Geometrie). Weiter kann eine Kombination der Verbindungsarten ausgeführt werden.

Unter Einbringung des Faserverbundteiles ist die Positionierung desselben im vorgesehenen Hohlraum zu verstehen oder dessen Positionierung auf einer Innenseite eines Schaufelteils und anschließendem Verschluss der Innenseite mittels eines Schaufelteils. Aufgrund hoher Schwingungsbeanspruchungen ist ein robuster und zuverlässiger Verschluss anzustreben. Im Fall einer metallischen Umschließung hat sich eine Schweißverbindung (Dichtschweißung) bewährt. Hierbei ist durch die Prozessführung (eingebrachte Wärmemenge, Abstand von der Schweißnaht) sicherzustellen, dass der Faserverbundwerkstoff nicht überhitzt und geschädigt wird.

Das Verfahrens zeichnet sich dadurch aus, dass das wenigstens eine Faserverbundteil gegenüber der Umschließung vorgespannt wird. Eine Vorspannung des Faserverbundteiles gegenüber der Umschließung entlastet letztere und sorgt für eine hohe Tragfähigkeit des Gesamtquerschnittes (Faserverbund + Umschließung). Die Vorspannung erfolgt dabei im Wesentlichen in Hauptbeanspruchungsrichtung des Faserverbundteiles gegenüber der Umschließung, welche dadurch eine Druckvorspannung erfährt. Das Faserverbundteil kann dabei für die hauptsächlich unidirektionale Kraftübertragung optimiert werden, während die Umschließung Torsions-, Biegungs- und Wölbkräfte übernehmen kann. Eine schwingungssichere Führung des Faserverbundteiles, beispielsweise durch seitliche Führung oder leichten Andruck an der Umschließung ist vorteilhaft.

Eine weitere Ausgestaltung des Verfahrens zeichnet sich dadurch aus, dass die Vorspannung durch die nachfolgenden Verfahrensschritte erzielt wird:
- Einbringen des wenigstens einen Faserverbundteiles in die Umschließung;
- Erstes Fixieren des Faserverbundteiles vorzugsweise im oberen Schaufelblattbereich;
- Abkühlen des Faserverbunds sowie der Umschließung auf eine Temperatur von wenigstens -20, vorzugsweise weniger als -60°C;
- Zweite Fixierung des Faserverbundteiles vorzugsweise im unteren Schaufelblattbereich;
- Erwärmen des Faserverbundteiles sowie der Umschließung auf wenigstens Umgebungstemperatur.

Für die Vorspannung des Faserverbundteiles wären bei mechanischer Einbringung sehr hohe lokale Kräfte erforderlich. Es hat sich daher als vorteilhaft erwiesen, das unterschiedliche thermische Dehnungsverhalten von Faserverbundmaterial und üblichen Umschließungsmaterialien zu nutzen. Faserverbundmaterial zieht sich bei Temperaturerhöhung zusammen oder hat nur eine minimal positive thermische Dehnung (typisch < 1*10⁻⁶ 1/K). Übliche Stahlwerkstoffe für Laufschaufeln liegen hingegen im Bereich von 12 ... 16*10⁻⁶ 1/K. Um das unterschiedliche Dehnungsverhalten zu nutzen bringt man das Faserverbundteil in die Umschließung ein und fixiert es vorzugsweise einseitig. Anschließend wird das Bauteil (Umschließung und Faserverbundteil) auf eine Temperatur von unter -20°C bevorzugt unter -60°C abgekühlt. Dann erfolgt wenigstens eine weitere Fixierung des Faserverbundteiles an der Umschließung und nachfolgend eine Erwärmung des Bauteils. Je nach Faserverbundwerkstoff sind so Vorspannungswerte von einigen 100 MPa bis zu >1000 MPa (Faserspannung) zu erreichen.

Die Art der Fixierung ist von großer Wichtigkeit für die Tragfähigkeit und Zuverlässigkeit. Dabei hat sich eine klebgerechte Ausführung als besonders geeignet erwiesen, bei der ein Krafteintrag in das Faserverbundteil im Wesentlichen über eine Schubspannung erfolgt. So kann eine übermäßige Beanspruchung des Verbundteiles vermieden werden.

Eine Ausgestaltung des Verfahrens sieht vor, dass das Faserverbundbauteil mittels Buchsen, welche in axial/faserparallel angeordneten Bohrungen in der Umschließung eingebracht sind, fixiert wird. Solche Buchsen könnten dann positionsfest (in feststehenden Aufnahmen) oder einstellbar in der Schaufel eingesetzt werden. Eine Einstellbarkeit kann beispielsweise durch eine (sicherbare) Gewindeverbindung, einen Keil, ein Passstück oder Ähnliches erfolgen. Die Fixierungen können dann durch direkten Verschluss (z.B. Schweißnaht) oder einen separaten (z.B. geschweißten) Deckel sichergestellt werden. Eine positionsfeste Fixierung kann auch durch unmittelbare Verklebung/Laminierung auf die Innenseite der Umschließung erreicht werden.

Nachfolgend werden weitere Vorteile und Ausbildungen der Erfindung anhand der Figuren erläutert.

### KURZBESCHREIBUNG DER ABBILDUNGEN

- Fig.1: den prinzipiellen Aufbau einer erfindungsgemäßen Laufschaufel in einer Seitenansicht,
- Fig. 2: ein erstes Ausführungsbeispiel einer erfindungsgemäßen Laufschaufel in Schnittdarstellung,
- Fig. 3: ein zweites Ausführungsbeispiel einer erfindungsgemäßen Laufschaufel in Schnittdarstellung,
- Fig. 4: ein drittes Ausführungsbeispiel einer erfindungsgemäßen Laufschaufel in Schnittdarstellung,
- Fig. 5: eine Detailansicht des Details Z aus Fig. 4,
- Fig. 6: eine Schnittdarstellung entlang der Linie A-A der Laufschaufel aus Fig. 4,
- Fig. 7: eine Detailansicht des Details y aus Fig. 4,
- Fig. 8: eine Detailansicht des Details X1 aus Fig. 4,
- Fig. 9: ein viertes Ausführungsbeispiel einer erfindungsgemäßen Laufschaufel in Schnittdarstellung,

Fig. 10 eine Detailansicht des Details X2 aus Fig. 9. Gleiche bzw. funktionsgleiche Bauteile sind figurübergreifend mit denselben Bezugszeichen versehen. Die Figuren sollen das Prinzip der Erfindung näher erläutern, wobei nur die wesentlichen für die Erfindung notwendigen Bauteile dargestellt sind. Die Darstellungen sind nicht zwangsläufig maßstabsgerecht.

### BESCHREIBUNG DER ERFINDUNG

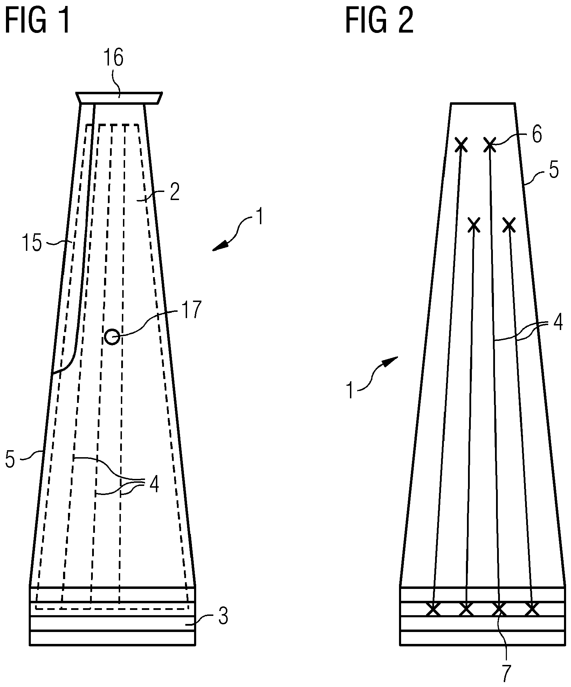

Fig. 1 zeigt den prinzipiellen Aufbau einer erfindungsgemäßen Laufschaufel 1 für eine Strömungsmaschine, beispielsweise eine Dampfturbine. Die Laufschaufel 1 umfasst einen Schaufelblattbereich 2 sowie einen Schaufelfußbereich 3. Die Laufschaufel 1 weist mehrere aus einem Faserverbundwerkstoff ausgebildete Faserverbundteile 4 sowie eine Umschließung 5 auf. Die Umschließung 5 umschließt dabei die Faserverbundteile 4 vollständig. Auf Grund der vollständigen Umschließung der Faserverbundteile 4, werden diese von Medieneinflüssen zuverlässig abgeschirmt, wodurch etwaige Festigkeitseinbußen wirkungsvoll verhindert werden. Dies stellt eine wesentliche Voraussetzung für einen dauerhaften Einsatz von Faserverbundwerkstoff dar. Medieneinflüsse können zu einer Veränderung der Werkstoffeigenschaften führen, bei einem Einsatz in Dampfturbinen, beispielsweise durch Einlagerung von Wasser. Dies bewirkt einen zeitabhängigen Festigkeitsverlust und kann schließlich zu einem Versagen des Bauteils führen. Bei einem Einsatz als Verdichterschaufel einer Gasturbine kann die Feuchtigkeit der zuströmenden Luft ebenfalls eine Wassereinlagerung bewirken. Dies gilt besonders bei einer Eindüsung von Wasser in die Ansaugluft. Darüber hinaus kann der Faserverbundwerkstoff mechanische Einwirkungen (speziell quer zur Faserrichtung) nur in geringem Maße ertragen, hier schützt die Umschließung 5 den Faserverbundwerkstoff ebenfalls wirkungsvoll. Die Umschließung 5 selbst kann an besonders beanspruchten Bereichen 15 zusätzlich lokal verstärkt ausgeführt werden (z. B. Auftragsschweißen, Härtung, Hartstoffauftrag). Solche besonders beanspruchten Bereiche 15 können zum Beispiel die Vorderkannte der Laufschaufel 1 sein.

Die Umschließung 5 ist aus einem metallischen Werkstoff ausgebildet und schließt alle notwendigen Kontaktelemente ein. Als Kontaktelemente sind alle Bereiche der Laufschaufel anzusehen, die Kontakt zu benachbarten Bauteilen haben, wie der Schaufelfußbereich 3, der in einer Nut im Rotor eingreift oder die Deckplatte 16 bzw. Dämpfungsdrähte 17, die sich gegenüber benachbarten Laufschaufeln abstützen, um Schwingungen zu reduzieren. Die Einbindung der Kontaktelemente 3, 16, 17 in die Umschließung 5 erlaubt hohe Kontaktpressungen und damit große Schaufellängen.

Fig. 2 zeigt ein erstes Ausführungsbeispiel einer erfindungsgemäßen Laufschaufel 1 nach Fig. 1 in einer Schnittdarstellung. Die Laufschaufel 1 umfasst mehrere, im Ausführungsbeispiel vier, einzelne als Faserstrang ausgebildete Faserverbundteile 4. Ein solcher Faserstrang kann beispielsweise aus einer Vielzahl voneinander verflochtenen einzelnen Fasern bestehen. Die einzelnen Faserverbundteile 4 sind an zwei Stellen 6, 7 an der Umschließung 5 fixiert und gegenüber der Umschließung 5 vorgespannt. Dabei hat es sich als vorteilhaft erwiesen, den Faserstrang zum einen im Schaufelblattbereich 2 nahe der Schaufelspitze und zum anderen im Schaufelfußbereich 3 oder in der Nähe des Schaufelfußbereiches 3 zu fixieren. Hierdurch liegen die Fixierungspunkte räumlich weit auseinander, wodurch sich hohe Vorspannungskräfte erzielen lassen.

Für die Vorspannung der Faserverbundteile 4 wären bei mechanischer Einbringung sehr hohe lokale Kräfte erforderlich. Es hat sich daher als vorteilhaft erwiesen, das unterschiedliche thermische Dehnungsverhalten von Faserverbundmaterial und üblichen Umschließungsmaterialien zu nutzen. Faserverbundmaterial zieht sich bei Temperaturerhöhung zusammen oder hat nur eine minimal positive thermische Dehnung (typisch < 1*10⁻⁶ 1/K). Übliche Stahlwerkstoffe für Laufschaufeln 1 liegen hingegen im Bereich von 12 ... 16*10⁻⁶ 1/K. Um das unterschiedliche Dehnungsverhalten zu nutzen, bringt man das Faserverbundteil 4 in die Umschließung 5 ein und fixiert es vorzugsweise einseitig. Anschließend wird das Bauteil (Umschließung und Faserverbundteil) auf eine Temperatur von unter -20°C bevorzugt unter -60°C abgekühlt. Dann erfolgt wenigstens eine weitere Fixierung des Faserverbundteiles 4 an der Umschließung 5 und nachfolgend eine Erwärmung des Bauteils (z.B. Erwärmung durch die Umgebungstemperatur). Je nach Faserverbundwerkstoff sind so Vorspannungswerte von einigen 100 MPa bis zu >1000 MPa (Faserspannung) zu erreichen.

Im Anschluss an die Vorspannung der Faserverbundteile 4 wird die Umschließung 5 druckdicht verschlossen, das Verschließen kann entweder direkt mit einem Schaufelteil (Schaufelfußabschnitt) oder mittels eines separaten Deckels erfolgen. Das verschließen kann stoffschlüssig (z. B. Schweißen, Löten, Kleben), formschlüssig (z. B. Einsetzen, Einrasten, Verriegeln, Bolzenverbindung) oder kraftschlüssig (z. B. Schraubverbindung, Schrumpfsitz) erfolgen. Auch kann die Verbindung generativ hergestellt werden (Auftragen einer Geometrie). Weiter kann eine Kombination der Verbindungsarten ausgeführt werden.

Aufgrund hoher Schwingungsbeanspruchungen ist ein robuster und zuverlässiger Verschluss anzustreben. Im Fall einer metallischen Umschließung hat sich eine Schweißverbindung (Dichtschweißung) bewährt. Hierbei ist durch die Prozessführung (eingebrachte Wärmemenge, Abstand von der Schweißnaht) sicherzustellen, dass der Faserverbundwerkstoff nicht überhitzt und geschädigt wird.

Die Vorspannung der Faserverbundteile 4 gegenüber der Umschließung 5 erfolgt im Wesentlichen in Hauptbeanspruchungsrichtung des Faserverbundteiles. Hierdurch erfährt die Umschließung eine Druckvorspannung. Die Faserverbundteile 4 sind für die hauptsächlich unidirektionale Kraftübertragung optimiert, während die Umschließung 5 Torsions-, Biegungs- und Wölbkräfte übernehmen können.

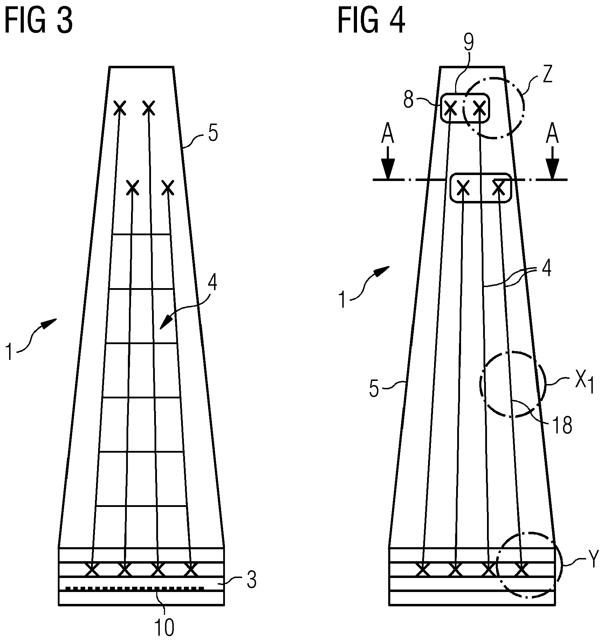

Fig.3 zeigt ein zweites Ausführungsbeispiel einer erfindungsgemäßen Laufschaufel 1 in Schnittdarstellung. Der prinzipielle Aufbau der Laufschaufel 1, entspricht dem in Fig. 2 beschriebenem Aufbau. Im Gegensatz zum Aufbau nach Fig. 2 weist die Laufschaufel 1 keine einzelnen, als Faserstrang ausgebildeten Faserverbundteile 4 auf, sondern eine aus mehreren Fasersträngen vorgefertigten Faserverbund auf, welcher als Ganzes durch eine Öffnung 10 in der Umschließung 5 in diese eingeführt und vorgespannt wird. Die Öffnung 10 wird anschließend druckdicht mit einem Deckel oder dem Schaufelfußbereich 3 verschlossen. Hierdurch erleichtert sich die Montage und Vorspannung des Faserverbundbauteils 4.

Anstelle eines vorgefertigten Faserverbundteils kann der Faserverbund auch durch Einlegen von Halbzeugen (Filamente, Gewebe, Gelege) und anschließendes Infiltrieren mit Matrixwerkstoff ausgebildet werden.

Fig. 4 zeigt ein drittes Ausführungsbeispiel einer erfindungsgemäßen Laufschaufel 1 in Schnittdarstellung. Die Laufschaufel 1 weist, wie die Laufschaufel 1 nach Fig. 2, einzelne, als Faserstränge ausgebildete Faserverbundteile 4 auf, die gegenüber der Umschließung 5 vorgespannt sind. Die Faserverbundteile 4 sind in Buchsen 9 fixiert, welche in axial/faserparallel ausgebildeten Bohrungen 8 in der Umschließung 5 angeordnet sind. Die schwingungsdämpfende Führung der Faserverbundteile 4 verhindert ein separates Schwingen der Faserverbundteile 4. Die detaillierte Ausgestaltung der Buchsen 9 sowie der schwingungsdämpfenden Führungen 18 der Faserverbundteile 4 werden an Hand der nachfolgenden Figuren näher erläutert. Die Figuren beziehen sich dabei jeweils auf die in Fig.4 bezeichneten Details.

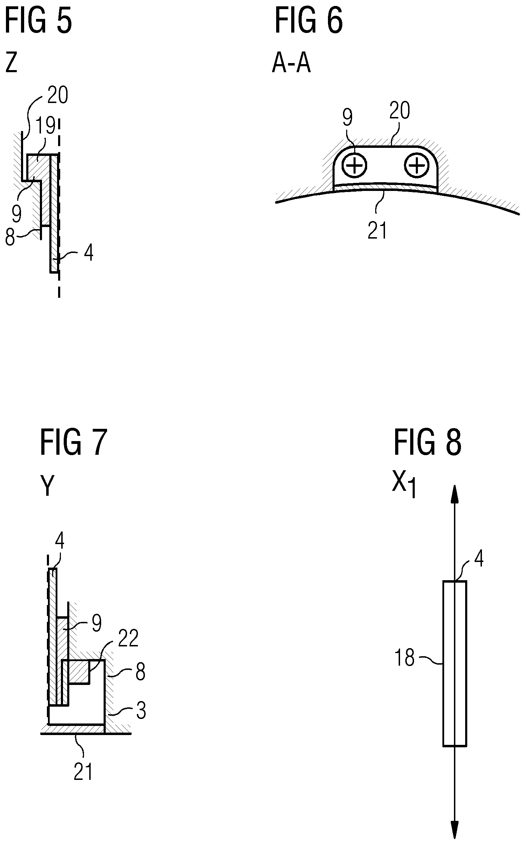

Fig. 5 zeigt das Detail Z aus Fig. 4, dabei handelt es sich um die Befestigung der Faserverbundteile 4 im Schaufelblattbereich 2 mittels einer Buchse 9. Die Buchse 9 ist positionsfest in einer Bohrung 8 innerhalb der Umschließung 5 angeordnet. Die Fixierung erfolgt durch unmittelbare Verklebung/Laminierung zwischen der Innenseite der Buchse 9 und der Außenseite des Faserverbundbauteils 4. Die Buchse 9 weist einen Absatz 19 auf, mit dem sie sich gegen eine Ausnehmung 20 in der Umschließung 5 abstützt.

Fig. 6 zeigt eine Detailansicht einer positionsfesten Fixierung entlang der Linie A-A in Fig. 4. Die Fixierung entspricht dabei im Wesentlichen der bereits in Fig. 5 beschriebenen Fixierung, bei der die Buchse 9 positionsfest in einer Bohrung 8 innerhalb der Umschließung 5 angeordnet ist und sich an der Ausnehmung 20 abstützt. Fig. 6 zeigt die Herstellung des druckdichten Verschlusses der Öffnung 10durch einen separaten (z.B. geschweißten) Deckel 21 oder alternativ durch einen direkten Verschluss (z.B. Schweißnaht).

Fig. 7 zeigt das Detail Y aus Fig. 4, dabei handelt es sich um die Befestigung der Faserverbundteile 4 im Schaufelfußbereich 3 mittels einer Buchse 9. Die Buchse 9 ist einstellbar in einer Bohrung 8 der Umschließung 5 eingesetzt. Die Einstellbarkeit wird durch eine Gewindeverbindung 22 erreicht. Alternativ ist eine Einstellbarkeit, beispielsweise auch mittels Keil, Passstück oder Ähnlichem realisierbar. Nach der Positionierung der Buchse 9 erfolgt dann ein Verschluss durch einen druckdicht angebrachten Deckel 21.

Fig. 8 zeigt das Detail X1 aus Fig. 4, in der Detailansicht ist die schwingungsdämpfende Führung 18 des Faserverbundteiles 4 zu erkennen. Die Schwingungsdämpfende Führung 4 verhindert ein separates Schwingen des Faserverbundes 4.

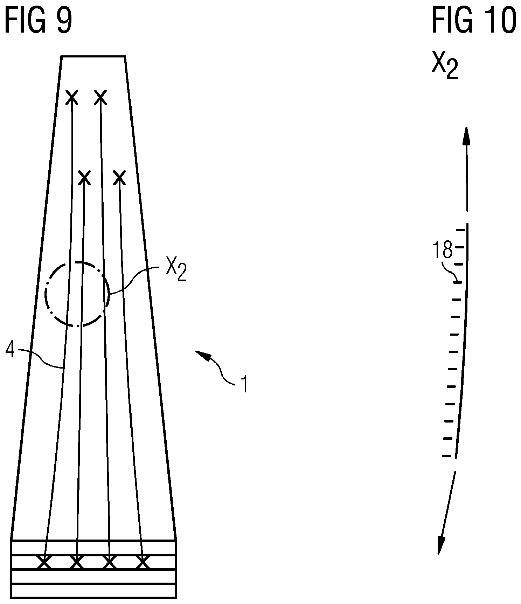

In Fig. 9 wird die schwingungsdämpfende Führung durch Führen des Faserverbundes unter einem leichten Bogen erreicht. Eine Detailansicht der bogenförmigen Führung ist als Detail X2 in Fig. 10 gezeigt, dabei liegt das Faserverbundteil 4 an der Bogen-Innenseite der Laufschaufel 1 an.

Eine schwingungsdämpfende Führung kann auch durch Vergießen oder eine geometrische Führung (Seitenwangen) erzielt werden.

Zusammenfasend kann festgestellt werden, dass die erfindungsgemäße Laufschaufel, erstmals die Eigenschaften der Verbundwerkstoffe mit den Anforderungen in Strömungsmaschinen vereinbar macht und somit einen dauerhaften Einsatz ermöglicht.

## Patentansprüche

1. Laufschaufel (1) für eine Strömungsmaschine, umfassend einen Schaufelblattbereich (2) sowie einen Schaufelfußbereich (3), wobei die Laufschaufel (1), wenigstens ein, aus einem Faserverbundwerkstoff ausgebildetes Faserverbundteil (4), sowie eine Umschließung (5) aufweist und die Umschließung (5) das Faserverbundteil (4) vollständig umschließt
**dadurch gekennzeichnet, dass**
das Faserverbundteil (4) gegenüber der Umschließung (5) vorgespannt wird.

2. Laufschaufel (1) nach Anspruch 1,
**dadurch gekennzeichnet, dass**
die Umschließung (5) Kontaktelemente (6), insbesondere den Schaufelfußbereich (3), umfasst.

3. Laufschaufel (1) nach Anspruch 1 oder 2,
**dadurch gekennzeichnet, dass**
die Umschließung (5) aus einem metallischen Werkstoff besteht und das Faserverbundteil (4) druckdicht umschließt.

4. Laufschaufel (1) nach einem der vorherigen Ansprüche,
**dadurch gekennzeichnet, dass**
das Faserverbundteil (4) in Hauptbeanspruchungsrichtung der Laufschaufel (1) vorgespannt wird.

5. Laufschaufel (1) nach einem der vorherigen Ansprüche,
**dadurch gekennzeichnet,**
**dass** wenigstens ein Teil des Faserverbundteils (4) an wenigstens einer ersten (6) und an wenigstens einer zweiten Stelle (7) an der Umschließung (5) fixiert ist.

6. Laufschaufel (1) nach Anspruch 5,
**dadurch gekennzeichnet,**
**dass** das Faserverbundteil (4) im, oder in der Nähe des Schaufelfußbereichs (3) und im Schaufelblattbereich (2) fixiert ist.

7. Laufschaufel (1) nach einem der vorherigen Ansprüche,
**dadurch gekennzeichnet,**
**dass** das Faserverbundteil (4) im Schaufelblattbereich (2) im Wesentlichen in Hauptbeanspruchungsrichtung der Laufschaufel (1) geführt ist.

8. Laufschaufel (1) nach einem der vorherigen Ansprüche,
**dadurch gekennzeichnet,**
**dass** die Laufschaufel (1) wenigstens eine axiale/faserparallele Bohrung (8) in der Umschließung (5) aufweist und in der Bohrung (8) wenigstens eine Buchse (9) angeordnet ist, an der zumindest ein Faserverbundteil (4) fixiert ist.

9. Laufschaufel (1) nach Anspruch 8,
**dadurch gekennzeichnet**,
die zumindest eine Buche (9) positionsfest angeordnet sind.

10. Laufschaufel (1) nach Anspruch 8,
**dadurch gekennzeichnet**,
die zumindest eine Buchse (9) einstellbar ausgebildet ist.

11. Verfahren zum Herstellen einer Laufschaufel (1) nach einem der Ansprüche 1 bis 10,
**gekennzeichnet, durch** die nachfolgenden Verfahrensschritte:
- Ausbilden des Faserverbundteils (4);
- Ausbilden der Umschließung (5), wobei die Umschließung eine Öffnung (10) zum Einführen des Faserverbundteils (5) ausweist;
- Einbringen des vorgefertigten Faserverbundteils (4) in die Umschließung (5);
- Druckdichtes Verschließen der Öffnung (10) in der Umschließung (5) mittels eines separaten Verschlusses (11) oder mittels eine Schaufelteils insbesondere des Schaufelfußbereichs (3)
- Vorspannen des Faserverbundteils (4) gegenüber der Umschließung (5).

12. Verfahren zum Herstellen einer Laufschaufel (1) nach Anspruch 11,
**dadurch gekennzeichnet, dass**
die Vorspannung durch die nachfolgenden Verfahrensschritte erzielt wird:
- Einbringen des Faserverbundteils (4) in die Umschließung (5) ;
- Erste Fixieren des Faserverbundteils (4) vorzugsweise im oberen Schaufelblattbereich (3);
- Abkühlen des Faserverbundteils (4) sowie der Umschließung (5) auf eine Temperatur von wenigstens -20°C, vorzugsweise weniger als -60°C;
- Zweite Fixierung des Faserverbundteils (4) vorzugsweise im unteren Teil des Schaufelblattbereich (3) oder im Schaufelfußbereich (3);
- Erwärmen des Faserverbundteils (4) sowie der Umschließung (5) auf wenigstens Umgebungstemperatur.

13. Verfahren zum Herstellen einer Laufschaufel (1) nach Anspruch 12,
**dadurch gekennzeichnet, dass**
die Fixierung des Faserverbundteils (4) mittels Buchsen (9), welche in axial/faserparallelen Bohrungen (8) in der Umschließung (5) eingebracht sind erfolgt.

14. Verfahren zum Herstellen einer Laufschaufel (1) nach Anspruch 13,
**dadurch gekennzeichnet, dass**
die Buchsen (9) positionsfest in feststehenden Aufnahmen (12) in der Umschließung (5) eingesetzt werden.

15. Verfahren zum Herstellen einer Laufschaufel (1) nach Anspruch 13,
**dadurch gekennzeichnet, dass**
die Buchsen (9) einstellbar in der Umschließung (5) eingesetzt werden.

16. Verfahren zum Herstellen einer Laufschaufel (1) nach Anspruch 15,
**dadurch gekennzeichnet, dass**
die Einstellbarkeit mittels einer Gewindeverbindung (13), eines Keils, eines Passstücks oder eines separaten Deckels (14) erfolgt.

## Claims

1. Rotor blade (1) for a turbo machine, comprising a turbine blade region (2) and a blade root region (3), the rotor blade (1) having at least one fibre composite part (4), configured from a fibre composite material, and an enclosure (5), the enclosure (5) enclosing the fibre composite part (4) completely,
**characterized in that**
the fibre composite part (4) is prestressed with respect to the enclosure (5).

2. Rotor blade (1) according to Claim 1,
**characterized in that**
the enclosure (5) comprises contact elements (6), in particular the blade root region (3).

3. Rotor blade (1) according to Claim 1 or 2,
**characterized in that**
the enclosure (5) consists of a metallic material and encloses the fibre composite part (4) in a pressure-tight manner.

4. Rotor blade (1) according to one of the preceding claims,
**characterized in that**
the fibre composite part (4) is prestressed in the main loading direction of the rotor blade (1).

5. Rotor blade (1) according to one of the preceding claims,
**characterized**
**in that** at least one part of the fibre composite part (4) is fixed on the enclosure (5) at at least one first (6) and at least one second point (7).

6. Rotor blade (1) according to Claim 5,
**characterized**
**in that** the fibre composite part (4) is fixed in or in the vicinity of the blade root region (3) and in the turbine blade region (2).

7. Rotor blade (1) according to one of the preceding claims,
**characterized**
**in that** the fibre composite part (4) is guided in the turbine blade region (2) substantially in the main loading direction of the rotor blade (1).

8. Rotor blade (1) according to one of the preceding claims,
**characterized**
**in that** the rotor blade (1) has at least one axial/fibre-parallel bore (8) in the enclosure (5), and at least one bush (9), on which at least one fibre composite part (4) is fixed, is arranged in the bore (8).

9. Rotor blade (1) according to Claim 8,
**characterized**
**in that** the at least one bush (9) is arranged in a positionally fixed manner.

10. Rotor blade (1) according to Claim 8,
**characterized**
**in that** the at least one bush (9) is of adjustable configuration.

11. Method for producing a rotor blade (1) according to one of Claims 1 to 10,
**characterized by** the following method steps:
- forming the fibre composite part (4);
- forming the enclosure (5), the enclosure having an opening (10) for introducing the fibre composite part (5);
- inserting the prefabricated fibre composite part (4) into the enclosure (5);
- closing the opening (10) in the enclosure (5) in a pressure-tight manner by means of a separate closure (11) or by means of a blade part, in particular of the blade root region (3);
- prestressing the fibre composite part (4) with respect to the enclosure (5).

12. Method for producing a rotor blade (1) according to Claim 11,
**characterized in that**
the prestress is achieved by way of the following method steps:
- introducing the fibre composite part (4) into the enclosure (5) ;
- fixing the fibre composite part (4) for the first time, preferably in the upper turbine blade region (3);
- cooling the fibre composite part (4) and the enclosure (5) to a temperature of at least -20°C, preferably less than -60°C;
- fixing the fibre composite part (4) for the second time, preferably in the lower part of the turbine blade region (3) or in the blade root region (3);
- heating the fibre composite part (4) and the enclosure (5) to at least ambient temperature.

13. Method for producing a rotor blade (1) according to Claim 12,
**characterized in that**
the fixing of the fibre composite part (4) takes place by means of bushes (9) which are introduced into axial/fibre-parallel bores (8) in the enclosure (5).

14. Method for producing a rotor blade (1) according to Claim 13,
**characterized in that**
the bushes (9) are inserted in a positionally fixed manner into stationary receptacles (12) in the enclosure (5).

15. Method for producing a rotor blade (1) according to Claim 13,
**characterized in that**
the bushes (9) are inserted adjustably into the enclosure (5).

16. Method for producing a rotor blade (1) according to Claim 15,
**characterized in that**
the adjustability is brought about by means of a threaded connection (13), a wedge, an adjusting piece or a separate cover (14) .

## Revendications

1. Aube (1) mobile d'une turbomachine comprenant une partie (2) de corps d'aube ainsi qu'une partie (3) d'emplanture d'aube, dans laquelle l'aube (1) mobile a au moins une partie (4) composite de fibres constituée en un matériau composite de fibres ainsi qu'une enveloppe (5) et l'enveloppe (5) enveloppe complètement la partie (4) composite de fibres,
**caractérisée en ce que**
la partie (4) composite de fibres est précontrainte par rapport à l'enveloppe (5).

2. Aube (1) mobile suivant la revendication 1,
**caractérisée en ce que**
l'enveloppe (5) entoure des éléments (6) de contact, en particulier la partie (3) d'emplanture de l'aube.

3. Aube (1) mobile suivant la revendication 1 ou 2,
**caractérisée en ce que**
l'enveloppe (5) est en un matériau métallique et enveloppe la partie (4) composite de fibres, d'une manière étanche à la pression.

4. Aube (1) mobile suivant l'une des revendications précédentes,
**caractérisée en ce que**
la partie (4) composite de fibres est précontrainte dans la direction de sollicitation principale de l'aube (1) mobile.

5. Aube (1) mobile suivant l'une des revendications précédentes,
**caractérisée en ce qu'**
au moins une partie de la partie (4) composite de fibres est fixée sur l'enveloppe (5) en au moins un premier (6) et en au moins un deuxième point (7).

6. Aube (1) mobile suivant la revendication 5,
**caractérisée en ce que**
la partie (4) composite de fibres est fixée dans ou à proximité de la partie (3) d'emplanture de l'aube et dans la partie (2) du corps de l'aube.

7. Aube (1) mobile suivant l'une des revendications précédentes,
**caractérisée en ce que**
la partie (4) composite de fibres est guidée dans la partie (2) du corps de l'aube sensiblement dans la direction de sollicitation principale de l'aube (1) mobile.

8. Aube (1) mobile suivant l'une des revendications précédentes,
**caractérisée en ce que**
l'aube (1) mobile a au moins un trou (8) axial/parallèle aux fibres dans l'enveloppe (5) et dans le trou (8) est disposé au moins une douille (9), sur laquelle est fixée au moins une partie (4) composite de fibres.

9. Aube (1) mobile suivant la revendication 8,
**caractérisée en ce que**
la au moins une douille (9) est disposée de manière fixe en position.

10. Aube (1) mobile suivant la revendication 8,
**caractérisée en ce que**
la au moins une douille (9) est réglable.

11. Procédé de fabrication d'une aube (1) mobile suivant l'une des revendications 1 à 10,
**caractérisé par** les stades de procédé suivants :
- formation de la partie (4) composite de fibres ;
- formation de l'enveloppe (5), l'enveloppe (5) ayant une ouverture (10) pour l'introduction de la partie composite de fibres ;
- introduction de la partie (4) composite de fibres préfabriquée dans l'enveloppe (5) ;
- fermeture d'une manière étanche à la pression de l'ouverture (10) de l'enveloppe (5) au moyen d'une fermeture (11) distincte ou au moyen d'une partie d'aube, en particulier de la partie (3) du corps de l'aube
- précontrainte de la partie (4) composite de fibres par rapport à l'enveloppe (5).

12. Procédé de fabrication d'une aube (1) mobile suivant la revendication 11,
**caractérisé en ce que**
on obtient la précontrainte par les stades de procédé suivants :
- introduction de la partie (4) composite de fibres dans l'enveloppe (5) ;
- première fixation de la partie (4) composite de fibres, de préférence dans la partie (3) supérieure du corps de l'aube ;
- refroidissement de la partie (4) composite de fibres ainsi que de l'enveloppe (5) à une température d'au moins -20°C, de préférence plus basse que - 60°C ;
- deuxième fixation de la partie (4) composite de fibres, de préférence dans la partie inférieure de la partie (3) du corps de l'aube ou dans la partie (3) d'emplanture de l'aube ;
- réchauffement de la partie (4) composite de fibres ainsi que de l'enveloppe (5) à au moins la température ambiante.

13. Procédé de fabrication de l'aube (1) mobile suivant la revendication 12,
**caractérisé en ce que**
la fixation de la partie (4) composite de fibres s'effectue au moyen de douilles (9), qui sont introduites dans des trous (8) axiaux/parallèles aux fibres de l'enveloppe (5).

14. Procédé de fabrication de l'aube (1) mobile suivant la revendication 13,
**caractérisé en ce que** l'
on insère les douilles (9) fixes en position dans des logements (12) fixes de l'enveloppe (5).

15. Procédé de fabrication de l'aube (1) mobile suivant la revendication 13,
**caractérisé en ce que** l'
on insère les douilles (9), de manière réglable dans l'enveloppe (5) .

16. Procédé de fabrication de l'aube (1) suivant la revendication 15,
**caractérisé en ce que**
la possibilité de réglage est obtenue au moyen d'une liaison (13) filetée, d'un coin, d'une cale ou d'un couvercle (14) distinct.
